(19) Europäisches Patentamt
European Patent Office
Office européen des brevets

(11) **EP 4 053 749 A1**

(12) **EUROPEAN PATENT APPLICATION**

(43) Date of publication:
**07.09.2022 Bulletin 2022/36**

(21) Application number: **21161069.6**

(22) Date of filing: **05.03.2021**

(51) International Patent Classification (IPC):
**G06N 3/04** (2006.01)   **G06N 3/08** (2006.01)

(52) Cooperative Patent Classification (CPC):
**G06N 3/084; G06N 3/0454; G06N 3/086;**
G06N 3/0472

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Blaiotta, Claudia**
  **70178 Stuttgart (DE)**
• **Katiyar, Prateek**
  **72074 Tuebingen (DE)**

Remarks:
•Amended claims 1-15 in accordance with Rule 137(2) EPC.
•Amended claims 1-15 filed after the date of filing of the application (Rule 68(4) EPC).

(54) **METHOD FOR DETERMINING AN OUTPUT SIGNAL BY MEANS OF A NEURAL NETWORK**

(57)    Computer-implemented method for determining an output signal ($y$) based on an input signal ($x$) and by means of a neural network (60), wherein the neural network (60) determines the output signal ($y$) based on a layer output determined by a first layer of the neural network, wherein the layer output is determined based on scaling a layer input of the first layer and shifting the scaled layer input, wherein the scaling and shifting is based on a plurality of auxiliary inputs ($a$) provided to the first layer.

**Fig. 2**

## Description

Technical field

The invention concerns a computer-implemented method for determining an output signal by means of a neural network, a computer-implemented training method, a neural network, a computer program and a machine.

Prior art

Harm De Vries et al. "Modulating early visual processing by language" in Advances in Neural Information Processing Systems, pages 6594-6604, 2017 discloses a method for scaling and shifting the input of a layer of a neural network based on an auxiliary input.

Advantages of the invention

Neural networks can be used as backbone for solving a variety of technical problems. Among others, these include image or audio classification, image or audio analysis and generating image data for, e.g., training other machine learning models.

Neural networks consist of layers, which accept a layer input (possibly from another layer of the neural network) and provide a layer output (possibly to another layer of the neural network). For training neural networks, it can be beneficial to integrate layers into the neural network that perform a scale-and-shift operation, i.e., scale the layer input, shift the scaled layer input and provide the scaled-and-shifted result as layer output. These kinds of layers may be especially beneficial during training of a neural network as they generally allow for a faster training of the neural network.

While typically the values for scaling and shifting are determined during training and then fixed for inference, De Vries et al. proposed to condition the values on an auxiliary input provided to a shift-and-scale layer. Using the language of the authors, the information from the auxiliary input are modulated onto a scale-and-shift operation.

This approach, however, does not allow for incorporating knowledge from multiple different sources of information, i.e., from multiple auxiliary inputs. The inventors found that while it is possible to naively concatenate different conditioning inputs and use a standard scale-and-shift layer, this approach does not facilitate the downstream layers, i.e., layers following the scale-and-shift layer, to disentangle the most relevant conditioning information, which can be critical at different stages of feature extraction and modulation. For example, in the case of deep features extracted from images, one of the auxiliary inputs might be relevant for modulating only the fine-grained features, whereas another may prove useful for enhancing coarse features.

The advantage of the method with features according to the independent claim 1 is that the processing of input data with a neural network is enabled to incorporate information from a plurality of auxiliary inputs. This has the effect of the neural network being able to more accurately predict an output with respect to a desired output. If the neural network is used for classification tasks, this may be understood as the neural network being able to classify input data with greater accuracy. If the neural network is used for generating images, the method allows for obtaining more-realistic looking images, which in turn can be used for training another machine learning system.

Disclosure of the invention

In a first aspect the invention concerns a computer-implemented method for determining an output signal based on an input signal and by means of a neural network, wherein the neural network determines the output signal based on a layer output determined by a first layer of the neural network, wherein the layer output is determined based on scaling a layer input of the first layer and shifting the scaled layer input, wherein the scaling and shifting is based on a plurality of auxiliary inputs provided to the first layer.

The neural network may be understood as a model from the field of machine learning. The neural network is understood to be able to be trained with data in order to infer some information about the data. The neural network may, for example, be configured to perform classification or regression hence mapping an input of the neural network to at least one discrete or respectively continuous value.

Besides discriminative tasks, the neural network may also be configured to solve generative problems. A well-known sub-class of neural networks specifically designed for such generative problems are generative adversarial networks, also known as GANs. These neural networks may especially be configured to determine an image based on a vector of real values hence mapping from a latent space to a picture space.

Other problems, which can be solved by neural networks, revolve around determining probabilities for input data. For example, the neural network may be configured to determine, for an input signal, how likely it is to observe the input signal given a set of training data. This problem is also known as predicting a likelihood with respect to the training data or a log-likelihood with respect to the training data. For these tasks, a sub-class of neural networks known as normalizing flows may be used. The obtained likelihood may especially be used to perform outlier detection or anomaly detection or novelty detection, i.e., an input signal can be scored by the neural network with respect to how likely the input signal characterizes an outlier or an anomaly or a novel content with respect to the training data.

The neural network may process an input signal by forwarding it through a plurality of layers. A first layer of the neural network processes the input signal and may forward it to another layer. Other layers of the neural network may accept an input from a preceding layer and forward it to a following layer. Here, a flow of information in the neural network can be understood as defining an order of the layers with respect to preceding and succeeding layers. An output of a layer may also be used as output signal of the neural network. For training, the output signal may be compared to a desired output signal and a plurality of parameters of the neural network may be adapted according to a difference between the obtained output signal and the desired output signal. Adapting the parameters this way is known as training.

It is beneficial for training the neural network to include layers into the neural network that perform a scaling and shifting operation. These kinds of layers allow for normalizing an input of a succeeding layer which can be shown to speed up the training process. As speeding up allows the training with more training data, this enables the neural network to achieve an improved performance, wherein performance may be understood as a neural networks ability to determine the correct output signal for an input signal with respect to a desired output signal.

The inventors found it to beneficial to enhance a layer performing scaling and shifting by incorporating information from the plurality of auxiliary inputs into the scaling and shifting.

An auxiliary input may be understood as at least one value, preferably a vector or tensor of values, characterizing additional information of the input signal to be processed by the neural network. For example, if the input signal is captured by a sensor, an auxiliary input may characterize information regarding a location the input signal was taken at, a time of day the input signal was taken at or other information that is readily available. The auxiliary input may also characterize a description of the input signal, for example in the form of an embedding of a descriptive sentence. In short, the auxiliary inputs may characterize meta-information corresponding to the input signal.

Alternatively, if the neural network is configured to generate data, e.g., generate image data, the auxiliary input may characterize attributes that the output signal shall exhibit. For example, for image data to be generated by the neural network an auxiliary input may characterize a time of day or a weather condition, which shall be characterized by the image to be generated.

In a preferred embodiment of the invention the layer output is determined based on separating the layer input into a definable amount of subsets, wherein for each subset:

- An auxiliary input is provided to the first layer;
- The subset is scaled based on a first value determined based on the auxiliary input and shifted based on a second value determined based on the auxiliary input.

The advantage of this embodiment is that each auxiliary input is modulated onto a specific part of the layer input. If the layer input is an output of another layer of the neural network, this enables neurons (if the other layer is a fully connected layer) or filters (if the other layer is a convolutional layer) of the other layer to adapt to specifics with respect to the respectively modulated auxiliary input. This is due to the fact that during backpropagation the gradient with respect to an auxiliary input is propagated back to a respective neuron or filter in the other layer. The inventors found that this enables the neurons or filters to better learn to detect certain semantic features which in turn improved the overall performance of the neural network.

Preferably, the layer input is in form of a tensor and separating the layer input is achieved by splitting the tensor along a dimension of the tensor.

The tensor may, for example, characterize a plurality of feature maps which are stacked along a dimension of the tensor. Each feature map may have been generated by a filter of a convolutional layer of the neural network. Preferably, the layer input can then be split along this dimension, i.e., the dimension along which the feature maps are stacked. This then enables the filters of the convolutional layer to learn to detect semantic features as described above.

The tensor may also characterize outputs from a fully connected layer. In this case, the tensor may be separated along a dimension of the tensor corresponding to outputs of different neurons of the fully connected layer.

In a preferred embodiment, the first value is determined by a first sub-network of the neural network and/or the second value is determined by a sub-network of the neural network.

A sub-network of the neural network may be understood as a subset of connected layers of all layers of the neural network. For example, the first layer may determine the first value based on a multi-layer perceptron, wherein the multi-layer perceptron is provided one of the auxiliary inputs and determines the first and/or second value.

The sub-network may comprise any type of layer suitable for processing an auxiliary input. For example, if the auxiliary input is provided in form of a tensor, the sub-network may comprise convolutional layers for processing the auxiliary input.

The sub-network may also be configured to accept the plurality of auxiliary inputs and provide a plurality of first values and a plurality of second values, e.g., one first value and one second value for each subset.

The best configuration of the sub-network, i.e., the type of layers used, the input processed by the sub-network and/or the output provided by the sub-network may, for example, be determined for a specific task of the neural network by means of a cross-validation.

In an embodiment of the invention, the input signal comprises at least one image and/or at least one audio datum and the output signal characterizes a classification and/or a regression value and/or a probability of the input signal with respect to a training dataset.

This may be understood as the neural network being configured for image analysis and/or audio analysis, specifically image classification and/or audio classification. Image analysis and/or audio analysis may also comprise determining a probability of an image and/or audio datum to be observed with respect to a training dataset. For example, the neural network may characterize a normalizing flow, wherein the first layer is a layer of the normalizing flow. In another embodiment, the neural network may be configured to determine at least one continuous value based on an image and/or audio datum, i.e., be configured for a regression task.

If the neural network is configured for image analysis, the method may further comprise a step of training the neural network, wherein the step of training comprises the steps of:

- Providing a training input signal, a desired output signal characterizing a desired classification and/or regression value and a plurality of auxiliary inputs, each of the auxiliary inputs characterizing meta-information of the input signal;
- Determining a training output signal for the training input signal by means of the neural network;
- Adapting at least one parameter of the neural network according to a loss value characterizing a deviation of the training output signal with respect to the desired output signal.

This may be understood as the neural network being trained in a supervised fashion. The training input signal may, for example, be provided from a database of recorded input signals, wherein the database also contains meta-information associated with the input signals, which are then provided alongside the training input signal. Training input signals may also be recorded from a sensor and be used for training directly. For example, an image may be recorded from a camera and be used directly for training the neural network. In this case, the auxiliary inputs may be provided by, e.g. other sensor capturing additional information about the image, e.g., a place or position of recording or a time of day.

The at least one parameter of the neural network, e.g., a weight of the neural network, may then be adapted based on a gradient descent optimization, an optimization by means of an evolutionary algorithm or second-order training procedures for neural networks.

In another embodiment the method may further comprise a step of training the neural network, wherein the step of training comprises the steps of:

- Determining, from a training dataset, a first training input signal;
- Determining a plurality of auxiliary inputs based on the training input signal and by means of a second machine learning model;
- Determining at least one randomly drawn value;
- Determining a second training input signal by means of the neural network and based on the at least one randomly drawn value and the determined plurality of auxiliary inputs;
- Determining a first loss value characterizing a classification of the first training input signal, a second loss value characterizing a classification of the second training input signal and a third loss value characterizing a difference between an output of the second machine learning model for the second training image and the plurality of auxiliary inputs;
- Adapting at least one parameter of the neural network according to a gradient of the first loss value, a gradient of the second loss value and a gradient of the third loss value, each of the gradients with respect to the at least one parameter.

This may be understood as the neural network being trained in an unsupervised fashion. The second machine learning model may be understood as being configured to determined relevant auxiliary inputs for a given training datum. For example, the neural network may be a GAN configured for generating images of pedestrians. The second machine learning model may be a second neural network configured to accept images of pedestrians and determine certain attributes such as, e.g., sex, age, height, type of clothing or headgear. An output of a layer of the second neural network may then be used as an auxiliary input. The second neural network may then either provide the plurality of auxiliary inputs (e.g., from different layers) or a plurality of second neural networks may be used, wherein each second neural network is used to determine one auxiliary input. The auxiliary inputs may then be provided to the scale-and-shift layers of the neural network, wherein the neural network is also provided the at least one randomly drawn value.

The neural network then determines the second training input signal. In the common nomenclature of GANs, this may be understood as the neural network generating the second training input signal. The first and second training input signal may then be provided to a discriminator to determine the first and second loss value for training the neural network. In addition, the second training input signal is processed by the second neural network or the plurality of second neural networks in order to determine the auxiliary inputs of the generated input signal. This may also be understood as comparing how consistent auxiliary inputs for the generated input signal, i.e., the second input signal, are with the auxiliary inputs provided to the neural network. If the output of the second neural network or the second neural networks is consistent with the originally determined auxiliary inputs, this may be understood as the neural network having learned to generate input signals which comprise desired information characterized by the auxiliary inputs provided to the neural network.

If the neural network is configured for generating input signals, the generated input signals may in turn be used to train yet another machine learning system. For example, the neural network may be configured to generate images, wherein the other machine learning system is then trained with the generated images. The other machine learning system may especially be trained in a semi-supervised fashion using the generated images or in an unsupervised fashion using the generated images.

In the different embodiments of the invention, it is also possible to use multiple scale-and-shift layers in the neural network and use the same auxiliary inputs for each such layer.

The inventors found that this enables the neural network to learn to modulate relevant information at different points of the flow of information of the neural network. For example, layers at the end of the neural network typically capture high level, i.e., coarse concepts of an input signal while layers earlier in the neural network typically learn to extract low-level concepts of the input signal. By providing the auxiliary inputs at different scale-and-shift layers, the neural network is enabled to learn which auxiliary inputs are relevant for determining low-level concepts and which auxiliary inputs are relevant for determining high-level concepts. The inventors found that this improves the predictive capabilities of the neural network.

Embodiments of the invention will be discussed with reference to the following figures in more detail. The figures show:

Figure 1    a training system for training a neural network;

Figure 2    a control system comprising a neural network controlling an actuator;

Figure 3    the control system controlling an at least partially autonomous robot;

Figure 4    the control system controlling a manufacturing machine;

Figure 5    the control system controlling an automated personal assistant;

Figure 6    the control system controlling an access control system;

Figure 7    the control system controlling a surveillance system;

Figure 8    the control system controlling an imaging system;

Figure 9    the control system controlling a medical analysis system.

Description of the embodiments

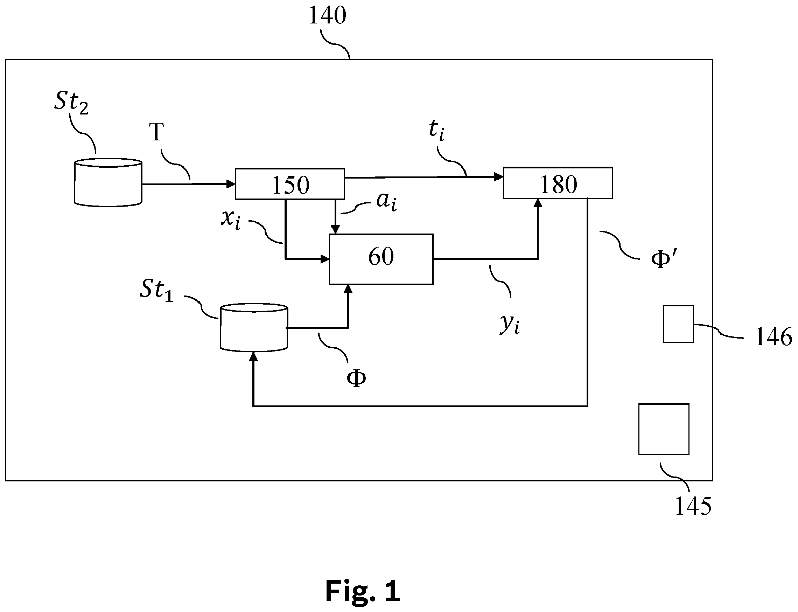

Figure 1 shows an embodiment of a training system (140) for training a neural network (60) by means of a training data set (T). The training data set (T) comprises a plurality of input signals ($x_i$) which are used for training the neural network (60), wherein the training data set (T) further comprises, for each input signal ($x_i$), a desired output signal ($t_i$) which characterizes a classification and/or a regression value of the input signal ($x_i$) as well as a plurality of auxiliary inputs ($a_i$).

The neural network (60) comprises at least one scale-and-shift layer, which is configured to scale an input of the scale-and-shift layer and shift the result of the scaling. The scale-and-shift layer accepts a layer input as input. The layer input may preferably be in the shape of a tensor or a matrix. The scale-and-shift layer is configured to slice its input along a definable dimension of the layer input in order to determine a definable amount of slices, wherein each slice characterizes a subset of the layer input. For each slice, a first value characterizing a scaling factor and a second factor characterizing a shifting constant is determined. For each slice, the scale-and-shift layer is configured to determine a slice output according to the formula:

$$o^{(j)} = s^{(j)} * f_1\left(a_i^{(j)}\right) - f_2\left(a_i^{(j)}\right),$$

wherein $o^{(j)}$ is the slice output for the $j$-th slice $s^{(j)}$, $f_1$ is the first value determined based on the $j$-th auxiliary input $a_i^{(j)}$ and $f_2$ is the second value determined based on the $j$-th auxiliary input $a_i^{(j)}$. The slice outputs for each slice may then be stacked along the dimension the layer input was originally sliced along and the stacked outputs may then be provided as layer output of the scale-and-shift layer.

The first value and the second value may preferably be determined by a sub-network of the neural network. Preferably, the first value and second value are determined by two different sub-networks of the neural networks. In the embodiment, the auxiliary inputs are given in the form of a scalar or a vector and the sub-network or the sub-networks are multilayer perceptrons. In other embodiments, the auxiliary inputs may be of another type and/or the sub-networks may be of another type. For example, the auxiliary inputs may be given in the form of a tensor and/or the sub-networks may be convolutional neural networks.

For training the neural network, a training data unit (150) accesses a computer-implemented database ($St_2$), the database ($St_2$) providing the training data set (T). The training data unit (150) determines from the training data set (T) preferably randomly at least one input

signal ($x_i$) and transmits the input signal ($x_i$) as well as the auxiliary inputs ($a_i$) for the input signal ($x_i$) to the neural network (60). The neural network (60) determines an output signal ($y_i$) based on the input signal ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters ($\Phi'$) for the neural network (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-likelihood function is used as the loss function. Other loss functions are also conceivable in alternative embodiments.

Furthermore, it is conceivable that the determined output signal ($y_i$) and the desired output signal ($t_i$) each comprise a plurality of sub-signals, for example in the form of tensors, wherein a sub-signal of the desired output signal ($t_i$) corresponds to a sub-signal of the determined output signal ($y_i$). It is conceivable, for example, that the classifier (60) is configured for object detection and a first sub-signal characterizes a probability of occurrence of an object with respect to a part of the input signal ($x_i$) and a second sub-signal characterizes the exact position of the object. If the determined output signal ($y_i$) and the desired output signal ($t_i$) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the classifier (60).

Furthermore, the training system (140) may comprise at least one processor (145) and at least one machine-readable storage medium (146) containing instructions which, when executed by the processor (145), cause the training system (140) to execute a training method according to one of the aspects of the invention.

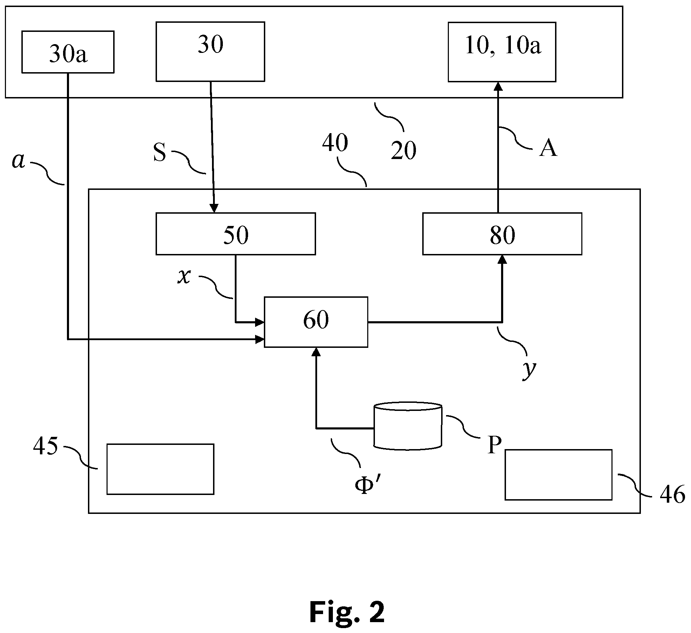

Shown in figure 2 is a control system (40) for controlling an actuator (10) based on an output of the neural network (60). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals ($x$). Alternatively, in case of no receiving unit (50), each sensor signal (S) may directly be taken as an input signal ($x$). The input signal ($x$) may, for example, be given as an excerpt from the sensor signal (S). Alternatively, the sensor signal (S) may be processed to yield the input signal ($x$). In other words, the input signal ($x$) is provided in accordance with the sensor signal (S).

The input signal ($x$) is then passed on to a classifier (60). In addition, a second sensor (30a) determines a plurality of auxiliary inputs ($a$), which are also provided to the neural network (60). The second sensor (30a) may preferably comprise a plurality of sensors to determine the plurality of auxiliary inputs ($a$).

The neural network (60) is parametrized by parameters ($\Phi$), which are stored in and provided by a parameter storage ($St_1$).

The neural network (60) determines an output signal ($y$) from the input signals ($x$). The output signal ($y$) comprises information that assigns one or more labels or regression values to the input signal ($x$). The output signal ($y$) is transmitted to an optional conversion unit (80), which converts the output signal ($y$) into the control signals (A). The control signals (A) are then transmitted to the actuator (10) for controlling the actuator (10) accordingly. Alternatively, the output signal ($y$) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

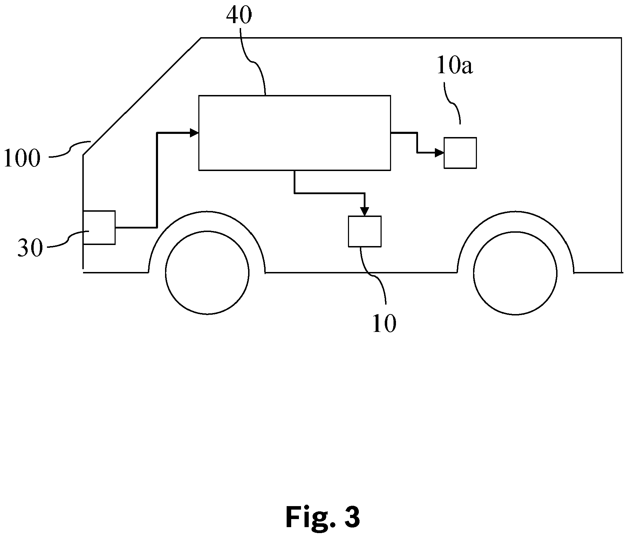

Figure 3 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal (x) may hence be understood as an input image. The auxiliary inputs (a) may especially characterize meta-information of the environment (20) of the vehicle (100), e.g., a time of day and/or a weather state and/or a temperature of the environment (20) and/or a location of the vehicle (e.g., a geographical position).

The image classifier (60) may be configured to detect objects in the vicinity of the at least partially autonomous robot based on the input image (x). The neural network (60) may hence be understood as an image classifier. The output signal (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the image classifier (60) deems them most likely to be, e.g., pedestrians or trees, and the control signal (A) may be determined depending on the classification.

Alternatively or additionally, the control signal (A) may also be used to control the display (10a), e.g., for displaying the objects detected by the image classifier (60). It can also be imagined that the control signal (A) may control the display (10a) such that it produces a warning signal, if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, the control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

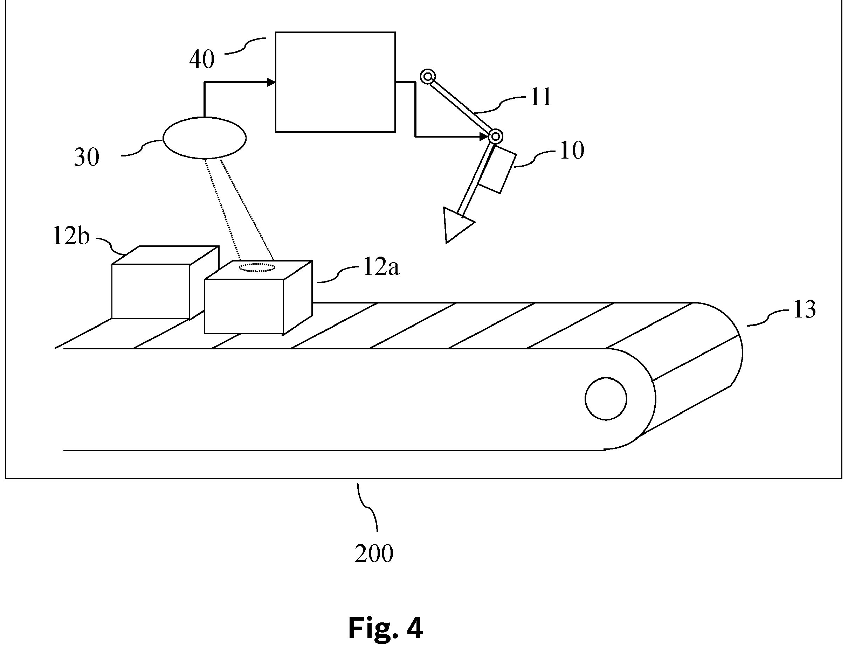

Shown in figure 4 is an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The auxiliary inputs (a) may characterize a temperature and/or a pressure and/or a power consumption of the manufacturing machine (11) and/or a concentration of a gas.

The neural network (60) may hence be understood as an image classifier.

The image classifier (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the image classifier (60) classifies, whether the manufactured product is broken or exhibits a defect. The actuator (10) may then be controlled as to remove the manufactured product from the transportation device.

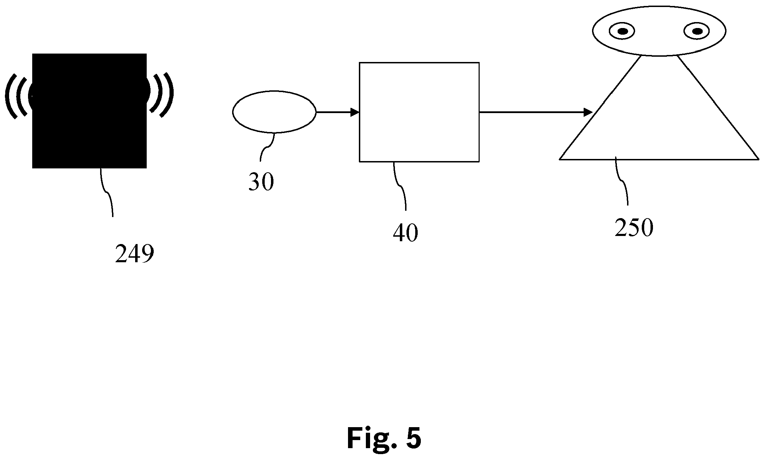

Shown in figure 5 is an embodiment in which the control system (40) is used for controlling an automated personal assistant (250). The sensor (30) may be an optical sensor, e.g., for receiving video images of gestures of a user (249). Alternatively, the sensor (30) may also be an audio sensor, e.g., for receiving a voice command of the user (249). The auxiliary input may, for example, characterize a time of day and/or a temperature and/or a position (e.g., a position inside of a room or a building or a geographical location).

The control system (40) then determines control signals (A) for controlling the automated personal assistant (250). The control signals (A) are determined in accordance with the sensor signal (S) of the sensor (30). The sensor signal (S) is transmitted to the control system (40). For example, the neural network (60) may be configured to, e.g., carry out a gesture recognition algorithm to identify a gesture made by the user (249). The control system (40) may then determine a control signal (A) for transmission to the automated personal assistant (250). It then transmits the control signal (A) to the automated personal assistant (250).

For example, the control signal (A) may be determined in accordance with the identified user gesture recognized by the neural network (60). It may comprise information that causes the automated personal assistant (250) to retrieve information from a database and output this retrieved information in a form suitable for reception by the user (249).

In further embodiments, it may be envisioned that instead of the automated personal assistant (250), the control system (40) controls a domestic appliance (not shown) controlled in accordance with the identified user gesture. The domestic appliance may be a washing machine, a stove, an oven, a microwave or a dishwasher.

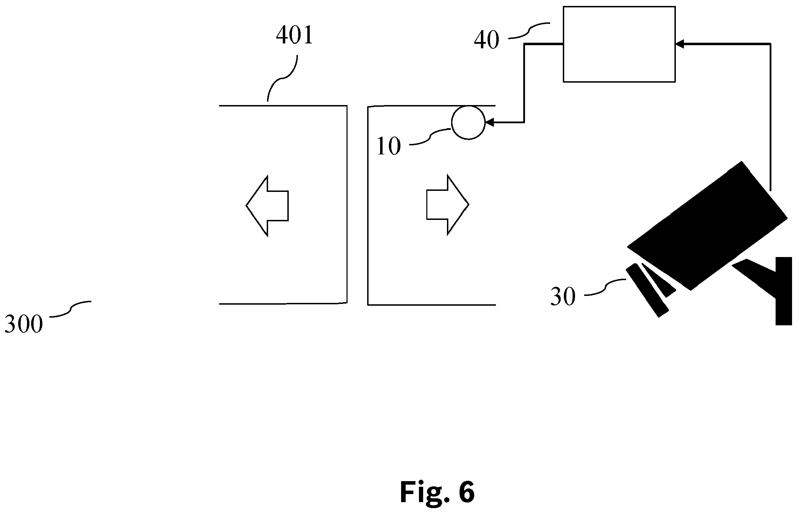

Shown in figure 6 is an embodiment in which the control system (40) controls an access control system (300). The access control system (300) may be designed to physically control access. It may, for example, comprise a door (401). The sensor (30) can be configured to detect a scene that is relevant for deciding whether access is to be granted or not. It may, for example, be an optical sensor for providing image or video data, e.g., for detecting a person's face. The neural network (60) may hence be understood as an image classifier. The auxiliary inputs may, for example, be a temperature and/or a time of day and/or a weather condition.

The neural network (60) may be configured to classify an identity of the person, e.g., by matching the detected face of the person with other faces of known persons stored in a database, thereby determining an identity of the person. The control signal (A) may then be determined depending on the classification of the image classifier (60), e.g., in accordance with the determined identity. The actuator (10) may be a lock, which opens or closes the door depending on the control signal (A). Alternatively, the access control system (300) may be a non-physical, logical access control system. In this case, the control signal may be used to control the display (10a) to show information about the person's identity and/or whether the person is to be given access.

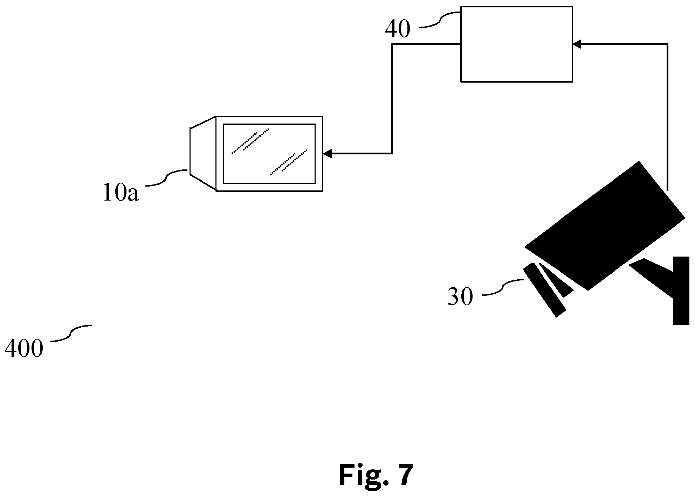

Shown in figure 7 is an embodiment in which the control system (40) controls a surveillance system (400). This embodiment is largely identical to the embodiment shown in figure 6. Therefore, only the differing aspects will be described in detail. The sensor (30) is configured to detect a scene that is under surveillance. The control system (40) does not necessarily control an actuator (10), but may alternatively control a display (10a). For example, the neural network (60) may determine a classification of a scene, e.g., whether the scene detected by an optical sensor (30) is normal or whether the scene exhibits an anomaly. The control signal (A), which is transmitted to the display (10a), may then, for example, be configured to cause the display (10a) to adjust the displayed content dependent on the determined classification, e.g., to highlight an object that is deemed anomalous by the neural network (60).

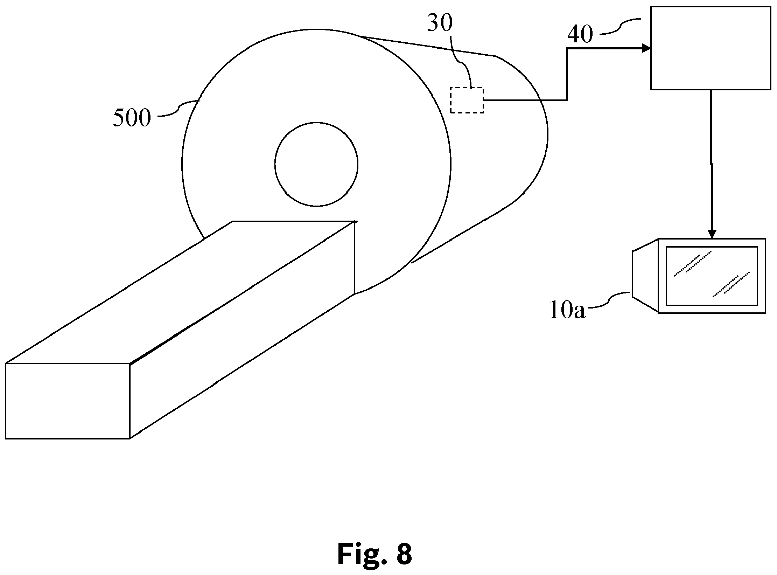

Shown in figure 8 is an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient. The auxiliary inputs may, for example, characterize clinically relevant data of the patient, for example a blood pressure and/or a height and/or a weight and/or a heart rate and/or an age.

The neural network (60) may then determine a classification of at least a part of the sensed image. The at least part of the image is hence used as input image (x) to the neural network (60). The neural network (60) may hence be understood as an image classifier.

The control signal (A) may then be chosen in accordance with the classification, thereby controlling a display (10a). For example, the neural network (60) may be configured to detect different types of tissue in the sensed image, e.g., by classifying the tissue displayed in the image into either malignant or benign tissue. This may be done by means of a semantic segmentation of the input image (x) by the neural network (60). The control signal (A) may then be determined to cause the display (10a) to display different tissues, e.g., by displaying the input image (x) and coloring different regions of identical tissue types in a same color.

In further embodiments (not shown) the imaging system (500) may be used for non-medical purposes, e.g., to determine material properties of a workpiece. In these embodiments, the neural network (60) may be configured to receive an input image (x) of at least a part of the workpiece and perform a semantic segmentation of the input image (x), thereby classifying the material properties of the workpiece. The control signal (A) may then be determined to cause the display (10a) to display the input image (*x*) as well as information about the detected material properties.

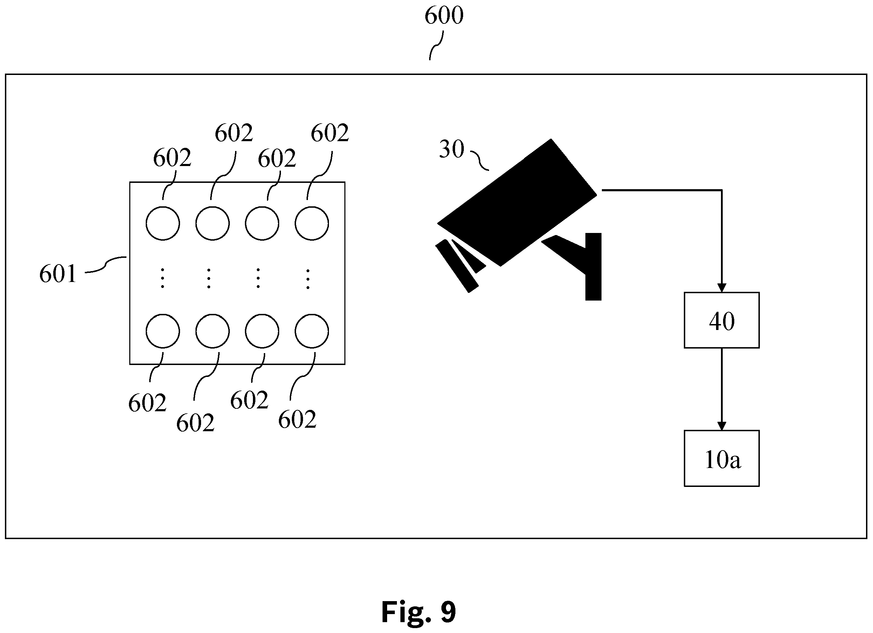

Figure 9 shows an embodiment of a medical analysis system (600) being controlled by the control system (40). The medical analysis system (600) is supplied with a microarray (601), wherein the microarray comprises a plurality of spots (602, also known as features) which have been exposed to a medical specimen. The medical specimen may, for example, be a human specimen or an animal specimen, e.g., obtained from a swab.

The microarray (601) may be a DNA microarray or a protein microarray.

The sensor (30) is configured to sense the microarray (601). The sensor (30) is preferably an optical sensor such as a video sensor. The neural network (60) may hence be understood as an image classifier. The auxiliary inputs may, for example, characterize meta-information about the patient or animal the specimen was taken from, e.g., an age and/or a sex and/or exposure times to certain compounds and/or genetic predispositions.

The neural network (60) is configured to classify a result of the specimen based on an input image (*x*) of the microarray supplied by the sensor (30). In particular, the neural network (60) may be configured to determine whether the microarray (601) indicates the presence of a pathogen in the specimen, e.g., a virus.

The control signal (A) may then be chosen such that the display (10a) shows the result of the classification.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N*. It may also be understood that elements of the plurality can be accessed by their index.

**Claims**

1. Computer-implemented method for determining an output signal (*y*) based on an input signal (*x*) and by means of a neural network (60), wherein the neural network (60) determines the output signal (*y*) based on a layer output determined by a first layer of the neural network, wherein the layer output is determined based on scaling a layer input of the first layer and shifting the scaled layer input, wherein the scaling and shifting is based on a plurality of auxiliary inputs (*a*) provided to the first layer.

2. Method according to claim 1, wherein the layer output is determined based on separating the layer input into a definable amount of subsets, wherein for each subset:

   • An auxiliary input (*a*) is provided to the first layer;
   • The subset is scaled based on a first value determined based on the auxiliary input and shifted based on a second value determined based on the auxiliary input.

3. Method according to claim 2, wherein the layer input is in form of a tensor and separating the layer input is achieved by splitting the tensor along a dimension of the tensor.

4. Method according to claim 2 or 3, wherein the first value is determined by a first sub-network of the neural network (60) and/or the second value is determined by a sub-network of the neural network (60).

5. Method according to any one of the claims 1 to 4, wherein the input signal (*x*) comprises at least one image and/or at least one audio datum and the output signal (*y*) characterizes a classification and/or a regression value and/or a probability of the input signal (*x*) with respect to a training dataset (T).

6. Method according to claim 5, wherein an auxiliary input (*a*) characterizes meta-information corresponding to the input signal (*x*).

7. Method according to any one of the claims 1 to 4, wherein the output signal (*y*) characterizes an image.

8. Method according to claim 7, wherein an auxiliary input (*a*) characterizes attributes of the image **characterized by** the output signal (*y*).

9. Method according to claim 5 or 6, wherein the method further comprises a step of training the neural network (60), wherein the step of training comprises the steps of:

   • Providing a training input signal (*x$_i$*), a desired output signal (*t$_i$*) characterizing a desired classification and/or regression value and a plurality of auxiliary inputs (*a$_i$*), each of the auxiliary inputs (*a$_i$*) characterizing meta information of the training input signal (*x$_i$*);
   • Determining a training output signal (*y$_i$*) for the training input signal (*x$_i$*) by means of the neural network (60);
   • Adapting at least one parameter (Φ) of the neural network (60) according to a loss value characterizing a deviation of the training output signal (*y$_i$*) with respect to the desired output signal

($t_i$).

10. Method according to claim 7 or 8, wherein the method further comprises a step of training the neural network (60), wherein the step of training comprises the steps of:

• Determining, form a training dataset (T), a first training input signal ($x_i$);
• Determining a plurality of auxiliary inputs ($a$) based on the training input signal ($x_i$) and by means of a second machine learning model;
• Determining at least one randomly drawn value;
• Determining a second training input signal by means of the neural network (60) and based on the at least one randomly drawn value and the determined plurality of auxiliary inputs ($a$);
• Determining a first loss value characterizing a classification of the first training input signal ($x_i$), a second loss value characterizing a classification of the second training input signal and a third loss value characterizing a difference between an output of the second machine learning model for the second training image and the plurality of auxiliary inputs ($a$);
• Adapting at least one parameter ($\Phi$) of the neural network (60) according to a gradient of the first loss value, a gradient of the second loss value and a gradient of the third loss value, each of the gradients with respect to the parameter ($\Phi$).

11. Neural network (60) according to any one of the claims 1 to 10.

12. Training system (140), which is configured to carry out the training method according to claim 9 or 10.

13. Control system (40), which is configured to control an actuator (10) based on an output of the neural network (60) according to claim 11.

14. Computer program that is configured to cause a computer to carry out the method according to any one of the claims 1 to 10 with all of its steps if the computer program is carried out by a processor (45, 145).

15. Machine-readable (46, 146) storage medium on which the computer program according to claim 14 is stored.

**Amended claims in accordance with Rule 137(2) EPC.**

1. Computer-implemented method for determining an output signal (y) based on an input signal (x) and by means of a neural network (60), wherein the input signal (x) is obtained by a sensor (30) and the neural network (60) determines the output signal (y) based on a layer output determined by a first layer of the neural network, wherein the layer output is determined based on scaling a layer input of the first layer and shifting the scaled layer input, wherein the scaling and shifting is based on a plurality of auxiliary inputs (a) provided to the first layer.

2. Method according to claim 1, wherein the layer output is determined based on separating the layer input into a definable amount of subsets, wherein for each subset:

• A distinct auxiliary input (a) from the plurality of auxiliary inputs is provided to the first layer;
• The subset is scaled based on a first value determined based on the auxiliary input and shifted based on a second value determined based on the auxiliary input.

3. Method according to claim 2, wherein the layer input is in form of a tensor and separating the layer input is achieved by splitting the tensor along a dimension of the tensor.

4. Method according to claim 2 or 3, wherein the first value is determined by a first sub-network of the neural network (60) and/or the second value is determined by a sub-network of the neural network (60).

5. Method according to any one of the claims 1 to 4, wherein the input signal (x) comprises at least one image and/or at least one audio datum and the output signal (y) characterizes a classification and/or a regression value and/or a probability of the input signal (x) with respect to a training dataset (T).

6. Method according to claim 5, wherein an auxiliary input (a) characterizes meta-information corresponding to the input signal (x).

7. Method according to any one of the claims 1 to 4, wherein the output signal (y) characterizes an image.

8. Method according to claim 7, wherein an auxiliary input (a) characterizes attributes of the image **characterized by** the output signal (y).

9. Method according to claim 5 or 6, wherein the method further comprises a step of training the neural network (60), wherein the step of training comprises the steps of:

• Providing a training input signal ($x_i$), a desired output signal ($t_i$) characterizing a desired clas-

sification and/or regression value and a plurality of auxiliary inputs ($a_i$), each of the auxiliary inputs ($a_i$) characterizing meta information of the training input signal ($x_i$);

• Determining a training output signal ($y_i$) for the training input signal ($x_i$) by means of the neural network (60);

• Adapting at least one parameter ($\Phi$) of the neural network (60) according to a loss value characterizing a deviation of the training output signal ($y_i$) with respect to the desired output signal ($t_i$).

10. Method according to claim 7 or 8, wherein the method further comprises a step of training the neural network (60), wherein the step of training comprises the steps of:

• Determining, form a training dataset (T), a first training input signal ($x_i$);

• Determining a plurality of auxiliary inputs (a) based on the training input signal ($x_i$) and by means of a second machine learning model;

• Determining at least one randomly drawn value;

• Determining a second training input signal by means of the neural network (60) and based on the at least one randomly drawn value and the determined plurality of auxiliary inputs (a);

• Determining an output from the second machine learning model for the second training input signal;

• Determining a first loss value characterizing a classification of the first training input signal ($x_i$), a second loss value characterizing a classification of the second training input signal and a third loss value characterizing a difference between the output of the second machine learning model for the second training input signal and the plurality of auxiliary inputs (a);

• Adapting at least one parameter ($\Phi$) of the neural network (60) according to a gradient of the first loss value, a gradient of the second loss value and a gradient of the third loss value, each of the gradients with respect to the parameter ($\Phi$).

11. Neural network (60) according to any one of the claims 1 to 10.

12. Training system (140), which is configured to carry out the training method according to claim 9 or 10.

13. Control system (40), which is configured to control an actuator (10) based on an output of the neural network (60) according to claim 11.

14. Computer program that is configured to cause a computer to carry out the method according to any one of the claims 1 to 10 with all of its steps if the computer program is carried out by a processor (45, 145).

15. Machine-readable (46, 146) storage medium on which the computer program according to claim 14 is stored.

**Fig. 1**

**Fig. 2**

EP 4 053 749 A1

**Fig. 3**

**Fig. 4**

Fig. 5

**Fig. 6**

**Fig. 7**

400

40

10a

30

Fig. 8

**Fig. 9**

EP 4 053 749 A1

Europäisches
Patentamt

European
Patent Office

Office européen
des brevets

**EUROPEAN SEARCH REPORT**

Application Number

EP 21 16 1069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DI KANG ET AL: "Incorporating Side Information by Adaptive Convolution", INTERNATIONAL JOURNAL OF COMPUTER VISION., 8 December 2017 (2017-12-08), pages 3867-3877, XP055728312, US ISSN: 0920-5691, DOI: 10.1007/s11263-020-01345-8 * abstract; figures 1-4, 7 * * paragraphs [0001] - [0004] * ----- | 1-15 | INV. G06N3/04 G06N3/08 |
| X | MAHESH KUMAR KRISHNA REDDY ET AL: "AdaCrowd: Unlabeled Scene Adaptation for Crowd Counting", ARXIV.ORG, CORNELL UNIVERSITY LIBRARY, 201 OLIN LIBRARY CORNELL UNIVERSITY ITHACA, NY 14853, 23 February 2021 (2021-02-23), XP081882999, * abstract; figures 1-4 * * paragraphs [000I] - [00IV] * ----- | 1,2,4-7, 9 | |
| X | KYUNG-WHA PARK ET AL: "Which Ads to Show? Advertisement Image Assessment with Auxiliary Information via Multi-step Modality Fusion", ARXIV.ORG, CORNELL UNIVERSITY LIBRARY, 201 OLIN LIBRARY CORNELL UNIVERSITY ITHACA, NY 14853, 6 October 2019 (2019-10-06), XP081511173, * the whole document * ----- -/-- | 1,11-15 | TECHNICAL FIELDS SEARCHED (IPC) G06N |

The present search report has been drawn up for all claims

| Place of search | Date of completion of the search | Examiner |
|---|---|---|
| Munich | 2 September 2021 | Cakiroglu Garton, S |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

Europäisches
Patentamt

European
Patent Office

Office européen
des brevets

**EUROPEAN SEARCH REPORT**

Application Number

EP 21 16 1069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TAKERU MIYATO ET AL: "cGANs with Projection Discriminator", ARXIV.ORG, CORNELL UNIVERSITY LIBRARY, 201 OLIN LIBRARY CORNELL UNIVERSITY ITHACA, NY 14853, 15 February 2018 (2018-02-15), XP081215673, * the whole document * | 10 | |
| A | XINYU GONG ET AL: "Sandwich Batch Normalization", ARXIV.ORG, CORNELL UNIVERSITY LIBRARY, 201 OLIN LIBRARY CORNELL UNIVERSITY ITHACA, NY 14853, 22 February 2021 (2021-02-22), XP081890545, * the whole document * | 10 | |

TECHNICAL FIELDS
SEARCHED        (IPC)

The present search report has been drawn up for all claims

| Place of search | Date of completion of the search | Examiner |
|---|---|---|
| Munich | 2 September 2021 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HARM DE VRIES et al.** Modulating early visual processing by language. *Advances in Neural Information Processing Systems,* 2017, 6594-6604